# EUROPEAN PATENT SPECIFICATION

(11) **EP 3 260 479 B1**
(45) Date of publication and mention of the grant of the patent: **27.11.2019**
(21) Application number: 16752480.0
(22) Date of filing: 16.02.2016
(51) Int. Cl.: C08F 290/06, E04G 23/02, C04B 26/06

(54) **USE OF A LOW-TEMPERATURE-CURABLE CROSS-SECTION REPAIR MATERIAL, AND CROSS-SECTION REPAIR METHOD USING SAME**
VERWENDUNG EINES BEI NIEDRIGER TEMPERATUR HÄRTBARES PROFILREPARATURMATERIALS UND PROFILREPARATURVERFAHREN MIT VERWENDUNG DAVON
UTILISATION D'UN MATÉRIAU DE RÉPARATION DE SECTION TRANSVERSALE DURCISSABLE À BASSE TEMPÉRATURE, ET PROCÉDÉ DE RÉPARATION DE SECTION TRANSVERSALE À L'AIDE DE CE DERNIER

(30) Priority: 19.02.2015 JP 2015030419; 01.09.2015 JP 2015172062
(43) Date of publication of application: 27.12.2017
(73) Proprietor: Showa Denko K.K., Tokyo 105-8518 (JP)
(72) Inventor: KUROKI, Kunihiro, Tokyo 105-8518 (JP); UMINO, Atsushi, Tokyo 105-8518 (JP)
(74) Representative: Strehl Schübel-Hopf & Partner
(86) International application number: PCT/JP2016/054458
(87) International publication number: WO 2016/133094

(56) References cited:
- WO-A1-2009/147953
- JP-A- 2010 242 461
- JP-A- 2011 236 108

## Description

### TECHNICAL FIELD

The present invention relates to the use of a low-temperature-curable cross-section repair material and a cross-section repairing method using the same.

### BACKGROUND ART

In recent years, since concrete structures have deteriorated remarkably due to neutralization, salt damage or the like, repair is required. In colder districts in particular, deterioration further progresses due to chlorides such as calcium chloride or sodium chloride used as a snow melting agent in addition to freezing and thawing of moisture contained in concrete. Therefore, it is necessary to repair the concrete structure as soon as possible.

Re-casting of concrete is a common method as a cross-section repairing method which is one of methods of repairing concrete structures. In this method, it takes time to cure concrete, and there is a disadvantage that the concrete does not cure at low temperatures. From such a background, a resin-based cross-section repair material has been proposed (for example, Patent Documents 1 and 2). However, in order to cure the resin-based cross-section repair material at an extremely low temperature of -25°C, it is necessary to use ultraviolet light curing and there is a problem in work safety.

On the other hand, although some floor resins in a refrigerated warehouse can be cured at an extremely low temperature (for example, Patent Document 3), compressive strength characteristics required as a cross-section repair material of a concrete structure are insufficient.

Patent Document 1: Japanese Unexamined Patent Publication No. H02-311345
Patent Document 2: Japanese Unexamined Patent Publication No. S60-95005
Patent Document 3: Japanese Unexamined Patent Publication No. 2009-292890

### SUMMARY OF THE INVENTION

Accordingly, the present invention has been made in view of the above-described circumstances, and it is an object of the present invention to provide the use of a low-temperature-curable cross-section curable composition which can be cured in a short amount of time even under the extremely low temperature environment of -25°C, and to provide a cross-section repairing method using the same.

Accordingly, the present inventors have conducted extensive studies to solve the above problems.

As a result, it was found that the use of a low-temperature-curable cross-section repair material containing a radical polymerizable resin composition (A), a cobalt metal salt (B), a hydroxyl group-containing aromatic tertiary amine (C-1) represented by the following general formula (I), an aromatic tertiary amine (C-2) represented by formula (II), an organic peroxide (D) and an inorganic filler (E), wherein the radical polymerizable resin composition (A) contains at least one radical polymerizable resin (A-1) selected from the group consisting of a vinyl ester resin, a urethane (meth)acrylate resin and a polyester (meth)acrylate resin; and a radical polymerizable unsaturated monomer (A-2) having at least two or more (meth)acryloyl groups, can solve the above-mentioned problems, and completed the first embodiment of the present invention.

Also, it was found that the use of a low-temperature-curable cross-section repair material containing a radical polymerizable resin composition (A), a hydroxyl group-containing aromatic tertiary amine (C-1) represented by the following general formula (I), an organic peroxide (D), an inorganic filler (E), wherein the radical polymerizable resin composition (A) contains at least one radical polymerizable compound (A-1) selected from the group consisting of a vinyl ester resin, a urethane (meth)acrylate resin and a polyester (meth)acrylate resin; and a radical polymerizable unsaturated monomer (A-2) having at least two or more (meth)acryloyl groups per molecule, also can solve the above-mentioned problems, and completed the second embodiment of the present invention.

According to the present invention, it is possible to provide the use of a low-temperature-curable cross-section repair material which can be cured in a short time even at a low temperature environment of -25°C and is excellent in workability and strength development, and also to provide a cross-section repairing method using the same.

### DETAILED DESCRIPTION OF THE INVENTION

### (First Embodiment)

Hereinafter, the use of a low-temperature-curable cross-section repair material according to a first embodiment of the present invention and a cross-section repairing method using the same will be described in detail.

### [Low-Temperature-Curable Cross-Section Repair Material]

The low-temperature-curable cross-section repair material used in the first embodiment of the present invention contains, as essential components, a radical polymerizable resin composition (A), a cobalt metal salt (B), a hydroxyl group-containing aromatic tertiary amine (C-1) represented by the following general formula (I), an aromatic tertiary amine (C-2) represented by the following general formula (II), an organic peroxide (D), an inorganic filler (E).

The radical polymerizable resin composition (A) used in the first embodiment of the present invention contains at least one radical polymerizable resin (A-1) selected from the group consisting of a vinyl ester resin, a urethane (meth)acrylate resin and a polyester (meth)acrylate resin; and a radical polymerizable unsaturated monomer (A-2) having at least two or more (meth)acryloyl groups per molecule.

In the present specification, the term "(meth)acrylate" means "one or both of methacrylate and acrylate". Further, in the present specification, the "(meth)acryloyl group" means "one or both of an acryloyl group and a methacryloyl group".

Hereinafter, a vinyl ester resin, an urethane (meth)acrylate resin, and a polyester (meth)acrylate resin will be described.

### <Vinyl Ester Resin>

The vinyl ester resin in the first embodiment of the present invention is sometimes referred as an epoxy (meth)acrylate resin and can be obtained by an esterification reaction of an epoxy compound and an unsaturated monobasic acid (saturated dibasic acid as necessary) can be used without limitation. Such a known vinyl ester resin is described, for example, in "Polyester Resin Handbook", published by Nikkan Kogyo Shimbun, published in 1988, and "Dictionary of Paint Dictionary", edited by the Color Materials Association, published in 1993 and the like.

Examples of the epoxy compounds include a bisphenol A type glycidyl ether and a novolac type glycidyl ether. More specifically, as a raw material of the vinyl ester resin, a reaction product of a bisphenol A and an epichlorohydrin, a reaction product of a hydrogenated bisphenol A and an epichlorohydrin, a reaction product of a cyclohexanedimethanol and an epichlorohydrin, a reaction product of a norbornane dialcohol and an epichlorohydrin, a reaction product of a tetrabromobisphenol A and an epichlorohydrin, a reaction product of a tricyclodecanedimethanol and an epichlorohydrin, an alicyclic diepoxy carbonate, an alicyclic diepoxyacetal, an alicyclic diepoxycarboxylate, a novolac type glycidyl ether, a cresol novolac type glycidyl ether, and the like.

Examples of the unsaturated monobasic acid include acrylic acid, methacrylic acid and the like.

Examples of the saturated dibasic acid include adipic acid, sebacic acid, dimer acid and the like.

Among the vinyl ester resins obtained from the above raw materials, the bisphenol-based vinyl ester resin is preferable from the viewpoint of physical properties of a cured product such as flexibility and toughness.

### <Urethane (meth)acrylate Resin>

The urethane (meth)acrylate resin in the first embodiment of the present invention is a radical-polymerizable unsaturated group-containing oligomer which can be obtained, for example, by reacting a polyisocyanate with a polyhydroxy compound or a polyhydric alcohol, and then reacting with the hydroxyl group-containing (meth)acryl compound, and optionally a hydroxyl group-containing allyl ether compound. Also, the urethane (meth)acrylate resin in the first embodiment of the present invention can be obtained by reacting a hydroxyl group-containing (meth)acrylic compound with a polyhydroxy compound or a polyhydric alcohol, and then further reacting with a polyisocyanate.

Examples of the polyisocyanate used as a raw material of the urethane (meth)acrylate resin include 2,4-tolylene diisocyanate and isomers thereof, diphenylmethane diisocyanate, hexamethylene diisocyanate, hydrogenated xylylene diisocyanate, isophorone diisocyanate, xylylene isocyanate, dicyclohexylmethane diisocyanate, naphthalene diisocyanate, triphenylmethane triisocyanate, BURNOCK D-750, Crisbon NK (trade name; manufactured by Dainippon Ink & Chemicals, Inc.), Desmodur L (trade name; manufactured by Sumitomo Bayer), Colonate L (Trade name; manufactured by Nippon Polyurethane Industry Co., Ltd.), Takenate D102 (trade name; manufactured by Takeda Pharmaceutical Co., Ltd.), Isonate 143 L (trade name; manufactured by Mitsubishi Chemical Corporation), Duranate Series (trade name, manufactured by Asahi Kasei Chemical Co., Ltd.) and the like. One kind of these polyisocyanates may be used alone, or two or more kinds thereof may be used in admixture. Among these, from the viewpoint of cost, diphenylmethane diisocyanate is preferred.

As the polyhydroxy compound used as a raw material of the urethane (meth)acrylate resin, a polyester polyol and a polyether polyol may be used. More specifically, it is preferable to use a glycerin-ethylene oxide adduct, glycerin-propylene oxide adduct, glycerin-tetrahydrofuran adduct, glycerin-ethylene oxide-propylene oxide adduct, trimethylolpropane-ethylene oxide adduct, trimethylolpropane-propylene oxide adduct, trimethylolpropane-tetrahydrofuran adduct, trimethylolpropane-ethylene oxide-propylene oxide adduct, dipentaerythritol-ethylene oxide adduct, dipentaerythritol-propylene oxide adduct, dipentaerythritol tetrahydrofuran adduct, di pentaerythritol-ethylene oxide-propylene oxide adduct and the like. These polyhydroxy compounds may be used alone, or two or more kinds thereof may be used in admixture.

Examples of the polyhydric alcohols used as a raw material of the urethane (meth)acrylate resin include ethylene glycol, diethylene glycol, triethylene glycol, polyethylene glycol, propylene glycol, dipropylene glycol, polypropylene glycol, 2-methyl-1,3-propanediol, 1,3-butanediol, adduct of bisphenol A with propylene oxide or ethylene oxide, 1,2,3,4-tetrahydroxybutane, glycerin, trimethylolpropane, 1,3-butanediol, 1,2-cyclohexane glycol, 1,3-cyclohexane glycol, 1,4-cyclohexane glycol, paraxylene glycol, bicyclohexyl-4,4-diol, 2,6-decalin glycol, 2,7-decalin glycol. These polyhydric alcohols may be used alone or may be used in combination of two or more.

The hydroxyl group-containing (meth)acrylic compound used as a raw material of the urethane (meth)acrylate resin is preferably a hydroxyl group-containing (meth)acrylic acid ester, and specific examples thereof include 2-hydroxyethyl (meth)acrylate, 2-hydroxypropyl (meth)acrylate, 3-hydroxybutyl (meth)acrylate, polyethylene glycol mono(meth)acrylate, polypropylene glycol mono(meth)acrylate, di(meth)acrylate of tris(hydroxyethyl)isocyanuric acid, pentaerythritol tri(meth)acrylate, glycerol(mono)(meth)acrylate, BLEMMER series (trade name, manufactured by NOF Corporation), and the like. These hydroxyl group-containing (meth)acryl compounds may be used alone, or two or more kinds thereof may be used in admixture.

Specific examples of the hydroxyl group-containing allyl ether compound used as a raw material of the urethane (meth)acrylate resin, as required, include ethylene glycol monoallyl ether, diethylene glycol monoallyl ether, triethylene glycol monoallyl ether, polyethylene glycol monoallyl ether, propylene glycol monoallyl ether, dipropylene glycol monoallyl ether, tripropylene glycol monoallyl ether, polypropylene glycol monoallyl ether, 1,2-butylene glycol monoallyl ether, 1,3-butylene glycol monoallyl ether , hexylene glycol monoallyl ether, octylene glycol monoallyl ether, trimethylolpropane diallyl ether, glycerin diallyl ether, pentaerythritol triallyl ether. These hydroxyl group-containing allyl ether compounds may be used alone or in combination of two or more kinds.

### <Polyester (meth)acrylate resin>

The polyester (meth)acrylate resin in the first embodiment of the present invention, is (1) a (meth)acrylate obtained by reacting an epoxy compound containing an α, β-unsaturated carboxylic acid ester group, with a polyester having terminal carboxyl groups derived from a polyhydric alcohol and at least one of the saturated polybasic acid and unsaturated polybasic acids; (2) a (meth)acrylate obtained by reacting a hydroxyl group-containing (meth)acrylate, with a polyester having terminal carboxyl groups derived from a polyhydric alcohol and at least one of the saturated polybasic acid and unsaturated polybasic acids; or (3) a (meth)acrylate obtained by reacting a (meth)acrylic acid with, with a polyester having terminal carboxyl groups derived from a polyhydric alcohol and at least one of the saturated polybasic acid and unsaturated polybasic acids.

As the saturated polybasic acid used as a raw material of the polyester (meth)acrylate resin, for example, a polybasic acid having no polymerizable unsaturated bond such as phthalic acid, isophthalic acid, terephthalic acid, tetrahydrophthalic acid, adipic acid, sebacic acid and the like; or anhydrides thereof may be used. Examples of the unsaturated polybasic acid include fumaric acid, maleic acid, itaconic acid and the like; or anhydrides thereof.

Examples of the polyhydric alcohol component include ethylene glycol, propylene glycol, diethylene glycol, dipropylene glycol, 1,2-butanediol, 1,3-butanediol, 1,5-pentanediol, 1,6-hexanediol, 2-methyl-1,3-propanediol, 2,2-dimethyl-1,3-propanediol, cyclohexane-1,4-dimethanol, ethylene oxide adduct of bisphenol A, propylene oxide adduct of bisphenol A.

As an α, β-unsaturated carboxylic acid ester having an epoxy group used for production of a polyester (meth)acrylate resin, glycidyl methacrylate is a typical example.

Among polyester (meth)acrylate resins obtained from the above raw materials, bisphenol A type polyester (meth)acrylate resin is preferable from the viewpoint of mechanical strength.

### <Radical Polymerizable Unsaturated Monomer>

The radical polymerizable unsaturated monomer (A-2) having at least two or more (meth)acryloyl groups per molecule in the first embodiment of the present invention is important to lower the viscosity of the resin and improve hardness, strength, chemical resistance, water resistance and the like.

The radical polymerizable unsaturated monomer (A-2) having at least two or more (meth)acryloyl groups per molecule in the first embodiment of the present invention is not particularly limited, and examples thereof include ethylene glycol di(meth)acrylate, diethylene glycol (meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, ethoxylated bisphenol A di(meth)acrylate, tricyclodecane di(meth)acrylate, 1,10-decanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, glycerin di(meth)acrylate, ethoxylated polypropylene glycol di(meth)acrylate, trimethylolpropane tri(meth)acrylate, ethoxylated isocyanuric acid tri(meth)acrylate, ε-caprolactone modified tris-(2-acryloxyethyl) isocyanurate, pentaerythritol tri(meth)acrylate, dimethylol propane tetra(meth)acrylate, ethoxylated pentaerythritol tetra(meth)acrylate, dipentaerythritol poly(meth)acrylate, dipentaerythritol hexa(metha)bis [4-(methacryloxyethoxy) phenyl] propane, 2,2-bis[4-(methacryloxy diethoxy) phenyl] propane, 2,2-bis[4-(methacryloxy polyethoxy) phenyl] propane, 2,2-bis[4-(acryloxy diethoxy) phenyl] propane, 2,2-bis[4-(acryloxy polyethoxy) phenyl] propane and the like. Among these, ethylene glycol di(meth)acrylate, diethylene glycol di(meth)acrylate and trimethylol propane tri(meth)acrylate are particularly preferable from the viewpoint of workability and compressive strength.

In addition to the radical polymerizable unsaturated monomer (A-2) having at least two or more (meth)acryloyl groups per molecule used in the first embodiment of the present invention, another radical polymerizable unsaturated monomer can also be used as long as the performance of the low-temperature-curable cross-section repair material is not deteriorated.

The radical polymerizable unsaturated monomer other than the radical polymerizable unsaturated monomer (A-2) having at least two or more (meth)acryloyl groups per molecule are not particularly limited, and examples thereof include a styrene monomer; a styrene type monomer such as α-, o-, m-, p-alkyl, nitro, cyano, amide, ester derivatives of styrene, chlorostyrene, vinyltoluene and divinylbenzene; a diene such as butadiene, 2,3-dimethylbutadiene, isoprene and chloroprene; an (meth)acrylate such as methyl (meth)acrylate, ethyl (meth)acrylate, n-propyl (meth)acrylate, i-propyl (meth)acrylate, hexyl (meth)acrylate, 2-ethylhexyl acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxyethyl (meth)acrylate, dicyclopentenyloxyethyl (meth)acrylate and phenoxyethyl (meth)acrylate. Also, condensates of an unsaturated acid such as maleic acid, fumaric acid and itaconic acid with an alcohol can be used.

A content of the radical polymerizable unsaturated monomer (A-2) having at least two or more (meth)acryloyl groups per molecule used in the first embodiment of the present invention in a radical polymerizable resin composition (A) is from 35% to 95% by mass, preferably from 50% to 95% by mass, more preferably from 70% to 95% by mass, with respect to the total weight of the composition.

When the content of the radical polymerizable unsaturated monomer (A-2) having at least two or more (meth)acryloyl groups per molecule in the radical polymerizable resin composition (A) is less than 35% by mass, it is not preferable because workability under a low temperature atmosphere and a wettability to aggregate may be deteriorated in some cases. On the other hand, when the content of the radical polymerizable unsaturated monomer (A-2) having at least two or more (meth)acryloyl groups per molecule in the radical polymerizable resin composition (A) exceeds 95 % by mass, it is not preferable because desired physical properties may not be obtained in some cases

In the present specification, "workability" means ease of coating when coating a low-temperature-curable cross-section repair material to a cross-section of concrete or the like.

The viscosity of the radical polymerizable resin composition (A) used in the first embodiment of the present invention is preferably 150 mPa·s or less at 25°C, and more preferably 100 mPa·s or less at 25°C.

When the viscosity of the radical polymerizable resin composition (A) is 150 mPa·s or less at 25°C, kneading property and workability do not deteriorate when an inorganic filler is added at low temperature.

### <Cobalt Metal Salt>

The cobalt metal salt (B) used in the first embodiment of the present invention acts as a curing accelerator and a drying-property-imparting agent.

Examples of the cobalt metal salt (B) include cobalt naphthenate, cobalt octylate, cobalt hydroxide and the like. cobalt naphthenate and cobalt octylate are preferable.

The cobalt metal salt (B) is blended in a ratio of 0.1 part by mass to 10 parts by mass, preferably 0.1 part by mass to 5.0 parts by mass with respect to 100 parts by mass of the radical polymerizable resin composition (A). When the compounding ratio of the cobalt metal salt (B) is within the above range, curing time is shortened, and curability and drying property are improved.

### <Hydroxyl Group-Containing Aromatic Tertiary Amine>

The hydroxyl group-containing aromatic tertiary amine (C-1) used in the first embodiment of the present invention is represented by the following general formula (I).

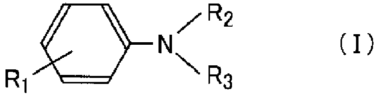

In the general formula (I), R₁ is H, CH₃ or OCH₃, R₂ is a hydroxyalkyl group, R₃ is an alkyl group or a hydroxyalkyl group, and the number of carbon atoms of the alkyl group and the hydroxyalkyl group is preferably 1 to 10.

Specific examples of the hydroxyl group-containing aromatic tertiary amine (C-1) used in the first embodiment of the present invention include N-methyl-N-β-hydroxyethyl aniline, N-butyl-N-hydroxyethyl aniline, N-methyl-N-β-hydroxyethyl-p-toluidine, N-butyl-N-p-hydroxyethyl-p-toluidine, N-methyl-N-β-hydroxypropyl aniline, N-methyl-N-β-hydroxypropyl-p-toluidine, N,N-di(β-hydroxyethyl) aniline, N,N-di(β-hydroxypropyl) aniline, N,N-di(β-hydroxyethyl)-p-toluidine, N,N-di(β-hydroxypropyl)-p-toluidine, N,N-diisopropylol-p-toluidine, N,N-di(β-hydroxyethyl)-p-anisidine and the like. These hydroxyl group-containing aromatic tertiary amines may be used alone, or two or more kinds thereof may be used in combination. As the hydroxyl group-containing aromatic tertiary amine, N,N-di(β-hydroxyethyl)-p-toluidine and N,N-di(β-hydroxypropyl)-p-toluidine are preferable from the viewpoint of low-temperature curability.

The hydroxyl group-containing aromatic tertiary amine (C-1) used in the first embodiment of the present invention is used in an amount of 0.1 parts by mass to 10 parts by mass, preferably 0.3 parts by mass to 10 parts by mass with respect with 100 parts by mass of the radical polymerizable resin composition (A). When the compounding ratio of the hydroxyl group-containing aromatic tertiary amine (C-1) is outside the above range, it is not preferable because curing defects and workability sometimes decrease.

### <Aromatic Tertiary Amine>

The aromatic tertiary amine (C-2) used in the first embodiment of the present invention is represented by the following general formula (II).

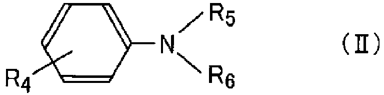

In the general formula (II), R₄ is H, CH₃ or OCH₃, R₅ and R₆ are each independently an alkyl group, and the alkyl group has preferably 1 to 10 carbon atoms.

Specific examples of the aromatic tertiary amine (C-2) used in the first embodiment of the present invention include N, N-dimethylaniline, N, N-dimethyl-p-toluidine and the like. These aromatic tertiary amines may be used alone, or two or more kinds thereof may be used in combination. N, N-dimethyl-p-toluidine is preferable as the aromatic tertiary amine from the viewpoint of low temperature curability.

The aromatic tertiary amine (C-2) used in the first embodiment of the present invention is used in an amount of 0.05 parts by mass to 1.0 part by mass, preferably 0.1 parts by mass to 1.0 part by mass, relative to 100 parts by mass of the radical polymerizable resin composition (A). When the compounding ratio of the aromatic tertiary amine (C-2) is within the above range, curability and workability are improved.

The hydroxyl group-containing aromatic tertiary amine (C-1) and the aromatic tertiary amine (C-2) are preferably blended in a mass ratio (C-1:C2) of 20:1 to 1:1, more preferably 20:1 to 2:1 by mass ratio. When the mass ratio of the hydroxyl group-containing aromatic tertiary amine (C-1) to the aromatic tertiary amine (C-2) is within the above range, the curing time can be shortened and it is possible to prevent curing failure, drying property defect, poor storage stability and the like.

### <Organic Peroxide>

The organic peroxide (D) used in the first embodiment of the present invention acts as a room temperature radical polymerization initiator when combined with a cobalt metal salt or an amine.

The organic peroxide (D) used in the first embodiment of the present invention is not particularly limited, but a known organic peroxide may be used. Examples of the organic peroxide include those classified as ketone peroxide, peroxy ketal, hydroperoxide, diallyl peroxide, diacyl peroxide, peroxy ester, and peroxydicarbonate. As the organic peroxide, an azo compound may also be used. Specific examples of the organic peroxide include benzoyl peroxide, dicumyl peroxide, diisopropyl peroxide, di-t-butyl peroxide, t-butyl peroxybenzoate, 1,1-bis(t-butylperoxy)-3,3,5-trimethylcyclohexane, 2,5-dimethyl-2,5-bis(t-butylperoxy)hexyne-3,3-isopropyl hydroperoxide, t-butyl hydroperoxide, dicumyl peroxide, dicumyl hydroperoxide, acetyl peroxide, bis (4-t-butylcyclohexyl)peroxydicarbonate, diisopropyl peroxydicarbonate, isobutyl peroxide, 3,3,5-trimethylhexanoyl peroxide, lauryl peroxide, azobisisobutyronitrile, azobiscarbonamido, benzoyl m-methylbenzoyl peroxide, m-toluoyl peroxide, methyl ethyl ketone peroxide, cumene hydroperoxide, t-butyl peroxybenzoate, and the like. Among these, at least one organic peroxide selected from the group consisting of benzoyl m-methylbenzoyl peroxide, m-toluoyl peroxide, methyl ethyl ketone peroxide, cumene hydroperoxide and t-butyl peroxybenzoate is preferable. A mixture of dibenzoyl peroxide, benzoyl m-methylbenzoyl peroxide and m-toluoyl peroxide; and a mixture of cumene hydroperoxide and t-butyl peroxybenzoate, and a mixture of cumene hydroperoxide and methyl ethyl ketone peroxide are particularly preferred.

The organic peroxide (D) used in the first embodiment of the present invention is blended in a ratio of 0.1 part by mass to 10 parts by mass, preferably 2 parts by mass to 8 parts by mass with respect to 100 parts by mass of the radical polymerizable resin composition (A). When the compounding ratio of the organic peroxide (D) is less than the above range, it is not preferable because curing may not proceed sufficiently. On the other hand, when the compounding ratio of the organic peroxide (D) exceeds the above range, it is not preferable because it is economically disadvantageous and the physical properties of the cured product may decrease.

### <Inorganic Filler>

The inorganic filler (E) used in the first embodiment of the present invention acts as an aggregate.

The inorganic filler (E) used in the first embodiment of the present invention is not particularly limited, but examples thereof include silica sand, silica, talc, alumina, aluminum hydroxide, calcium carbonate, aluminum, titanium and the like. Of these, from the viewpoint of cost and material availability, silica sand, silica and calcium carbonate are preferable.

The particle size of the inorganic filler (E) is preferably 1 nm to 5000 µm, and more preferably 10 nm to 2000 µm. When the particle size of the inorganic filler (E) is within the above range, the workability and physical properties of the low-temperature-curable cross-section repair material can be improved.

The inorganic filler (E) used in the first embodiment of the present invention is blended in a ratio of 1.0 part by mass to 500 parts by mass, preferably 2.0 part by mass to 450 parts by mass with respect to 100 parts by mass of the radical polymerizable resin composition (A). When the compounding ratio of the inorganic filler (E) is out of the above range, it is not preferable because curing failure may occur and workability may decrease.

### <Optional Component>

In the low-temperature-curable cross-section repair material of the first embodiment of the present invention, a photopolymerization initiator having photosensitivity in the visible light region or the near-infrared light region, polymerization inhibitors, waxes, thixotropic agents, reinforcing materials, coupling agents, curing accelerators and the like may be added, as long as the effect of the first embodiment of the present invention is not impaired.

Examples of the photopolymerization initiator having photosensitivity in the visible light region or the near infrared light region include Irgacure 1800 (manufactured by Ciba Specialty Chemicals) and the like.

The photopolymerization initiator is preferably compounded in a ratio of 0.01 parts by mass to 15 parts by mass, more preferably 0.05 parts by mass to 10 parts by mass, with respect to 100 parts by mass of the radical polymerizable resin composition (A). When the compounding ratio of the photopolymerization initiator is within the above range, it is possible to prevent the surface drying property and the physical properties of the cured product from deteriorating.

Examples of the polymerization inhibitor include hydroquinone, methylhydroquinone, trimethylhydroquinone, tertiary butylcatechol, 2,6-di-tertiary butyl 4-methylphenone and the like.

The waxes are compounded for the purpose of improving the drying property. Known waxes can be used without any limitation, and examples thereof include petroleum wax (paraffin wax, microcrystalline and the like), plant wax (candelilla wax, rice wax, Japanese wax and the like), animal wax (beeswax, Spermaceti etc.), mineral wax (montan wax etc.), synthetic wax (polyethylene wax, amide wax, etc.) and the like. Specific examples of the waxes include paraffin waxes having a melting point of about 20°C to 80°C, BYK-S-750, BYK-S-740, BYK-LP-S 6665 (manufactured by BYK Japan K.K.), and the like. Waxes having different melting points may be used in combination. In order to effectively derive the effects of paraffin wax or the like added for the purpose of improving drying property, a drying-property-imparting agent as described in JP-A-2002-97233 may be used in combination.

It is preferable that the waxes are blended in a ratio of 0.1 parts by mass to 5.0 parts by mass with respect to 100 parts by mass of the radical polymerizable resin composition (A). When the compounding ratio of the wax is set within the above range, it is possible to prevent the surface drying property and the physical properties of the cured product from deteriorating.

In order to improve the solubility and dispersibility of the paraffin wax, a solvent can be used. As the solvent, a known solvent may be used, and examples thereof include an alkyl ether acetate such as ethyl acetate; am ether such as tetrahydrofuran; a ketone such as acetone, methyl ethyl ketone, methyl isobutyl ketone, cyclohexanone and the like; a hydrocarbon such as benzene, toluene, xylene, octane, decane and dodecane; a petroleum solvent such as petroleum ether, petroleum naphtha, hydrogenated petroleum naphtha and solvent naphtha; a lactic acid ester such as methyl lactate, ethyl lactate and butyl lactate; a dimethylformamide; a N-methylpyrrolidone and the like.

The thixotropic agent is compounded for the purpose of imparting thixotropy. Examples of thixotropic agents include an inorganic powder such as silica powder (Aerosil type), mica powder, calcium carbonate powder, short fiber asbestos and the like, as well as a known organic type such as hydrogenated castor oil. As the thixotropic agent, a silica based thixotropic agent is preferable. In addition, in particular, the Aerosil type may be used in combination with a rocking aid such as BYK R605 (manufactured by BYK Chemie).

Examples of the reinforcing material include short fibers such as carbon, ceramics, and stainless steel.

As the coupling agent, a known coupling agent can be used, and a silane coupling agent such as aminosilane, vinylsilane, epoxysilane, acrylsilane or the like is preferable.

The curing accelerator is not particularly limited, but examples thereof include β-diketone such as acetylacetone, ethyl acetoacetate, α-acetyl-γ-butyrolactone, N-pyrogininoacetoacetamide, N, N-dimethylacetoacetamide and the like.

In the low-temperature-curable cross-section repair material of the first embodiment of the present invention having such above-mentioned constitutions, an after-24-hours compressive strength of a cured product of the material which is produced under an atmosphere of -25°C in a test according to JIS K 6911 "thermosetting plastics general test method" is preferably 20 MPa or more, more preferably 60 MPa or more.

When the after-24-hours compressive strength of the cured product falls within the above range, performance as a cross-section restoring material can be maintained even after being subjected to freeze-thawing after construction.

The low-temperature-curable cross-section repair material of this embodiment can be cured in a short time even in a low-temperature environment of -25°C, is excellent in workability of forming a coating film, and is excellent in strength development of a coating film.

### [Cross-section Repairing Method]

The cross-section repairing method according to the first embodiment of the present invention is a method including steps of forming a coating film by coating the above-mentioned low-temperature-curable cross-section repair material on at least one cross-section selected from the group consisting of concrete, asphalt concrete, mortar, wood and metal, at an atmosphere of -25°C or higher; and curing the coating film. Through these steps, a film made from a low-temperature-curable cross-section repair material and having a desired thickness is formed on the cross section. In the cross-section repairing method according to the first embodiment of the present invention, among the above-mentioned objects, concrete and asphalt concrete are preferable as the object to be coated with the low-temperature-curable cross-section repair material.

The method of coating the low-temperature-curable cross section repair material to the above cross section is not particularly limited, but examples thereof include a coating method by dipping, a coating method by spraying, a coating method by a roller, a coating method using instruments such as a brush and a spatula and the like.

The coating amount of the low-temperature-curable cross section repair material to the above cross section is not particularly limited. For example, the coating amount of the low-temperature-curable cross section repair material is appropriately adjusted according to adhesion of the low-temperature-curable cross section repair material to the low-temperature-curable cross section repair material or strength of the coat composed of the low-temperature-curable cross section repair material.

The drying method of the coating film made of the low temperature-curing cross-section repair material is not particularly limited, but a method of spontaneously drying or a method of heating within a range not deteriorating the properties of the finally obtained coating film is used.

The cross-section repairing method according to the first embodiment of the present invention can form a coating film excellent in strength development within 24 hours even in a low-temperature environment of -25°C.

### (Second Embodiment)

Hereinafter, a low-temperature-curable cross-section repair material according to a second embodiment of the present invention and a cross-section repairing method using the same will be described in detail.

### [Low-temperature-curable Cross Section Repair material]

The low-temperature-curable cross-section repair material according to the second embodiment of the present invention comprises, as essential components, a radical polymerizable resin composition (A) and a hydroxyl group-containing aromatic tertiary amine (C-1) represented by the general formula (I), an organic peroxide (D), and an inorganic filler (E). Furthermore, the aromatic tertiary amine (C-2) represented by the general formula (II) and the cobalt metal salt (B) can be contained. That is, as compared with the first embodiment of the present invention, the aromatic tertiary amine (C-2) represented by the general formula (II) and a cobalt metal salt (B) which are contained as essential components in the first embodiment are not essential components.

Like the radical polymerizable resin composition (A) of the first embodiment of the present invention, the radical polymerizable resin composition (A) used in the second embodiment of the present invention contains at least one radical polymerizable resin (A-1) selected from the group consisting of a vinyl ester resin, a urethane (meth), acrylate resins and polyester (meth)acrylate resins; and a radical polymerizable unsaturated monomer (A-2) having at least two or more (meth)acryloyl groups per molecule.

Further, as an optional component, a wax such as paraffin wax at 115°F may be contained as long as the effect of the present invention is not impaired.

Hereinafter, vinyl ester resin, urethane (meth)acrylate resin, and polyester (meth)acrylate resin will be described.

### <Vinyl Ester Resin>

The vinyl ester resin in the second embodiment of the present invention is the same as the vinyl ester resin used in the first embodiment of the present invention.

### <Urethane (Meth)acrylate Resin>

The urethane (meth)acrylate resin in the second embodiment of the present invention is the same as the urethane (meth)acrylate resin used in the first embodiment of the present invention.

### <Polyester (Meth)acrylate Resin>

The polyester (meth)acrylate resin in the second embodiment of the present invention is the same as the polyester (meth)acrylate resin used in the first embodiment of the present invention.

### <Radical Polymerizable Unsaturated Monomer>

In the second embodiment of the present invention, the radical polymerizable unsaturated monomer (A-2) having at least two or more (meth)acryloyl groups per molecule in the first embodiment of the present invention is the same as the radical polymerizable unsaturated monomer (A-2) having at least two or more (meth)acryloyl groups.

### <Hydroxyl Group-Containing Aromatic Tertiary Amine>

The hydroxyl group-containing aromatic tertiary amine (C-1) used in the second embodiment of the present invention is the same as the hydroxyl group-containing aromatic tertiary amine (C-1) used in the first embodiment of the present invention.

### <Organic Peroxide>

The organic peroxide (D) used in the second embodiment of the present invention is the same as the organic peroxide (D) used in the first embodiment of the present invention.

### <Inorganic Filler>

The inorganic filler (E) used in the second embodiment of the present invention is the same as the inorganic filler (E) used in the first embodiment of the present invention.

### <Optional Component>

The low-temperature-curable cross-section repair material of the second embodiment of the present invention is different from the low-temperature-curable cross-sectional repair material of the first embodiment of the present invention in that the cobalt metal salt (B) of the second embodiment, acting as the curing accelerator and the drying-property-imparting agent, which may be blended as necessary, is not an essential component but an optional component.

Examples of the cobalt metal salt (B) include cobalt naphthenate, cobalt octylate, cobalt hydroxide and the like, and cobalt naphthenate and cobalt octylate are preferable.

When cobalt metal salt (B) is blended, it is preferably blended in a ratio of 0.1 parts by mass to 10 parts by mass, more preferably from 0.1 parts by mass to 5 parts by mass, with respect to 100 parts by mass of the radical polymerizable resin composition (A). When the compounding ratio of the cobalt metal salt (B) is within the above range, the curing time is shortened, and curability and drying property are good.

In the low-temperature-curable cross-section repair material of the second embodiment of the present invention, unlike the low-temperature-curable cross-section repair material of the first embodiment of the present invention, an aromatic tertiary amine (C-2) represented by the following general formula (II) is not an essential component but an optional component, which may be used in combination with the hydroxyl group-containing aromatic tertiary amine (C-1) as necessary.

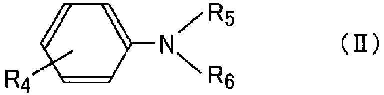

In the general formula (II), R₄ is H, CH₃ or OCH₃, and R₅ and R₆ are each independently an alkyl group, and the alkyl group has preferably 1 to 10 carbon atoms.

The aromatic tertiary amine (C-2) used in the second embodiment of the present invention is the same as the aromatic tertiary amine (C-2) described in the first embodiment of the present invention.

In the case of blending the aromatic tertiary amine (C-2) in the second embodiment of the present invention, the amount of the aromatic tertiary amine (C-2) is preferably from 0.05 parts by mass to 1.0 mass, more preferably in a ratio of 0.1 parts by mass to 1.0 part by mass, with respect to 100 parts by mass of the radical polymerizable resin composition (A). When the proportion of the aromatic tertiary amine (C-2) is within the above range, curability and workability are good.

The hydroxyl group-containing aromatic tertiary amine (C-1) and the aromatic tertiary amine (C-2) are preferably blended in a mass ratio (C-1:C-2) of 20:1 to 1:1, more preferably in a mass ratio of 20:1 to 2:1. When the mass ratio of the hydroxyl group-containing aromatic tertiary amine (C-1) to the aromatic tertiary amine (C-2) is within the above range, the curing time can be shortened, and it is possible to prevent curing failure, drying property defect, storage stability failure and the like.

Besides, similarly to the first embodiment of the present invention, in the range of visible light or near-infrared light described in the first embodiment of the present invention, as long as the effect of the second embodiment of the present invention is not impaired, a photopolymerization initiator having photosensitivity, a polymerization inhibitor, a wax, a thixotropic agent, a reinforcing material, a coupling agent, a curing accelerator and the like may be added.

In the low-temperature-curable cross-section repair material of the second embodiment of the present invention having such above-mentioned constitutions, an after-24-hours compressive strength of a cured product of the material which is produced under an atmosphere of -25°C in a test according to JIS K 6911 "thermosetting plastics general test method" is preferably 20 MPa or more, more preferably 60 MPa or more.

When the after-24-hours compressive strength of the cured product falls within the above range, performance as a cross-section restoring material can be maintained even after being subjected to freeze-thawing after construction.

The low-temperature-curable cross-section repair material of the present embodiment can be cured in a short time even under a low temperature environment of -25°C or less, has excellent drying properties in terms of the formed coating film, is excellent in workability of forming a coating film and is excellent in strength development of the coating film.

### [Cross-Section Repairing Method]

A cross-section repairing method according to the second embodiment of the present invention is the same as the first embodiment of the present invention.

In the cross-section repairing method according to the second embodiment of the present invention, it is possible to form a coating film with high strength developing properties within 24 hours even in a low temperature environment of -25°C.

### EXAMPLE

Hereinafter, the first embodiment of the present invention will be described in more detail with reference to examples and comparative examples, but the present invention is not limited to the following examples.

### <Synthesis Example 1>

460 g of Epicoat 828 (epoxy resin manufactured by Yuka Shell Co., epoxy equivalent: 189) was charged in a reactor equipped with a stirrer, a reflux condenser, a gas introduction tube and a thermometer. A temperature was raised to 120°C. While maintaining the temperature, 210 g of methacrylic acid, 2 g of tetramethylbenzylammonium chloride and 0.3 g of methylhydroquinone were added. The mixture was further reacted at 120°C for 2 hours while flowing air. The reaction was terminated until an acid value became 10 mg KOH/g and then a vinyl ester resin was obtained. Next, 15.0 g of Paraffin Wax 115°F and 822 g of diethylene glycol dimethacrylate were added to the vinyl ester resin. As a result, a bisphenol A based vinyl ester resin composition (VE-1) having a viscosity at 25°C of 98 mPa·s, a solid content of 45 % by mass and a content of diethylene glycol dimethacrylate of 55 % by mass was obtained.

### <Synthesis Example 2>

The same operation as in Synthesis Example 1 was carried out except that the addition amount of the diethylene glycol dimethacrylate in Synthesis Example 1 was changed to 6050 g. As a result, a vinyl ester resin composition (VE-2) having a viscosity at 25°C of 15 mPa·s, a solid content of 10 % by mass and a content of diethylene glycol dimethacrylate of 90 % by mass was obtained.

### <Synthesis Example 3>

The same operation as in Synthesis Example 1 was carried out except that the addition amount of diethylene glycol dimethacrylate in Synthesis Example 1 was changed to 528 g. As a result, a vinyl ester resin composition (VE-3) having a viscosity at 25°C of 305 mPa·s, a solid content of 54 % by mass and a content of diethylene glycol dimethacrylate of 44 % by mass was obtained.

### <Synthesis Example 4>

The same operation as in Synthesis Example 1 was carried out except that diethylene glycol dimethacrylate in Synthesis Example 1 was changed to styrene monomer and the amount added was changed to 288 g. As a result, a vinyl ester resin composition (VE-4) having a viscosity at 25°C of 53 mPa·s, a solid content of 70 % by mass and a content of styrene monomer of 30 % by mass was obtained.

### <Synthesis Example 5>

604 g of dipropylene glycol and 1080 g of isophthalic acid were charged in a reactor equipped with a stirrer, a reflux condenser, a gas introduction tube and a thermometer. A temperature was raised to 205°C in a nitrogen atmosphere and the mixture was reacted for 3 hours. And then it was cooled to 100 °C. Subsequently, 0.6 g of methylhydroquinone and 498 g of glycidyl methacrylate were added to the mixture under air and the resulted mixture was reacted at 120°C to 130 °C for 2 hours to obtain a polyester methacrylate resin. Next, 200 g of Paraffin Wax 115°F and 19638 g of trimethylolpropane trimethacrylate were added to the polyester methacrylate resin. As a result, a polyester methacrylate resin composition (PMA-1) having a viscosity at 25°C of 95 mPa·s, a solid content of 10 % by mass and a content of trimethylolpropane trimethacrylate of 90 % by mass was obtained.

### <Synthesis Example 6>

223 g of diphenylmethane diisocyanate, 188 g of ADEKA polyether polyol P-400 (polyether polyol manufactured by ADEKA Corporation: weight average molecular weight 400), and 0.1 g of dibutyltin dilaurate were charged in a reactor equipped with a stirrer, a reflux condenser, a gas introduction tube and a thermometer. The mixture was stirred at 60°C for 4 hours. Next, 121 g of 2-hydroxyethyl methacrylate was added dropwise over 2 hours while stirring. After completion of the dropwise addition, stirring was continued for 5 hours. And then, 2135 g of diethylene glycol dimethacrylate was added. As a result, a urethane methacrylate resin composition (UMA-1) having a viscosity of 68 mPa·s at 25°C, a solid content of 20% by mass and a content of diethylene glycol dimethacrylate of 80% by mass was obtained.

Using the radical polymerizable resin compositions obtained in Synthesis Examples 1 to 6, curable resin compositions of Examples 1 to 8 and Comparative Example 1 having compositions shown in Table 1 were prepared and evaluated on the following items.

After the radical polymerizable resin compositions of Synthesis Examples 1 to 6 were allowed to stand in an atmosphere of -25°C for 24 hours, the curable resin compositions of Examples 1 to 8 and Comparative Example 1 were prepared with the formulation shown in Table 1. Evaluation of curability at -25°C and measurement of compressive strength of the obtained curable resin composition were carried out according to the following method.

Amounts of the cobalt metal salt, the hydroxyl group-containing aromatic tertiary amine, the aromatic tertiary amine, the organic peroxide, and the inorganic filler shown in Table 1 were amounts with respect to 100 parts by mass of the radical polymerizable resin compositions of Synthesis Examples 1 to 6. The test method is shown below.

### [-25°C Curability]

A concrete board from which weak laitance layer portion had been removed was cured for 24 weeks in an atmosphere of -25°C and then the curable resin composition prepared above was coated to the concrete plate to a thickness of 10 mm under the same temperature condition. Curing time was confirmed by touching the surface with one's fingers. And then, curability was evaluated by "G (good)" when the curing time was less than 6 hours, "N (normal)" when the curing time was more than 6 hours but less than 12 hours, and "B (bad)" when the curing time was 12 hours or more. The results are shown in Table 1.

### [Compression Test]

At -25°C, the previously prepared curable resin composition was poured into a mold described in JIS K 6911 (1995) "General test method for thermosetting plastics" 5.19 Compressive Strength (2) Test Piece. After curing at the same temperature for 24 hours, it was demolded and the compressive strength according to JIS K 6911 "General Test Method for Thermosetting Plastics" was measured under an environment of -25°C. The results are shown in Table 1. Regarding compressive strength of the curable resin composition of Comparative Example 1, since the curable resin composition of Comparative Example 1 was not cured, a test piece could not be prepared and could not be measured.

**Table 1**

| (parts by mass) | | Example | | | | | | | | | | | | | | | | Comp. Example 1 |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | |
| (A) Radical Polymerizable Resin Composition | VE-1 | 100 | 100 | 100 | 100 | | | | | 100 | 100 | | | | | 100 | 100 | |
| | VE-2 | | | | | 100 | | | | | | 100 | | | | | | |
| | VE-3 | | | | | | 100 | | | | | | 100 | | | | | |
| | VE-4 | | | | | | | | | | | | | | | | | 100 |
| | PMA-1 | | | | | | | 100 | | | | | | 100 | | | | |
| | UMA-1 | | | | | | | | 100 | | | | | | 100 | | | |
| (B) Cobal Metal Salt | Cobalt Octylate | 1.8 | 1.8 | 1.8 | 1.8 | 1.8 | 1.8 | 1.8 | 1.8 | - | - | - | - | - | - | - | - | 0.5 |
| (C-1) Hydroxyl Group-Containing Aromatic Tertiary Amine | PT-2HE | 4 | 4 | 4 | 4 | 4 | 0.2 | 4 | 4 | 5 | 5 | 5 | 5 | 5 | 4 | 4 | 4 | 4 |
| (C-2) Aromatic Tertiary Amine | DMPT | 0.2 | 0.2 | 0.2 | 0.2 | 0.2 | 4 | 0.2 | 0.2 | - | - | - | - | - | 0.2 | 0.2 | 0.2 | 1 |
| (D) Organic Peroxide | Nyper BMT-M | | 5 | | | | 6 | 5 | 5 | | 5 | | 6 | 5 | 4 | | 5 | 6 |
| | Nyper NS | 5 | | | | 5 | | | | 5 | | 5 | | | | 5 | | |
| | Percumyl H-80 | | | 4 | 2.4 | | | | | | | | | | | | | |
| | Perbutyl Z | | | 1 | 0.6 | | | | | | | | | | | | | |
| | Parmec N | | | | 2 | | | | | | | | | | | | | |
| (E) Inorganic Filler | Softon 1200 | 50 | 50 | 50 | 50 | 50 | 50 | 50 | 50 | 50 | 50 | 50 | 50 | 50 | 50 | 50 | 50 | 50 |
| | No.5 Silica Sand | 150 | 100 | 100 | 100 | 150 | 100 | 100 | 100 | 150 | 100 | 150 | 100 | 100 | 100 | 100 | 100 | 100 |
| | No.7 Silica Sand | 150 | 50 | 50 | 50 | 150 | 50 | 50 | 50 | 150 | 50 | 150 | 50 | 50 | 50 | 50 | 50 | 50 |
| | Cab-O-Sil TS-720 | 2 | 2 | 2 | 2 | 3 | 2 | 2 | 2 | 2 | 2 | 3 | 2 | 2 | 2 | 2 | 2 | 2 |
| -25°C Curability | | G | G | G | G | G | G | G | G | G | G | G | G | G | G | G | G | B |
| -25°C Drying Property | | E | E | E | E | E | E | E | E | G | G | G | G | G | G | G | G | B |
| -25°C Compressive Strength (MPa) | | 62 | 100 | 80 | 78 | 65 | 31 | 98 | 101 | 53 | 85 | 70 | 28 | 90 | 95 | 65 | 100 | Uncured |

| | | | | | | | | | | | | | | | | | | |
|---|---|---|---|---|---|---|---|---|---|---|---|---|---|---|---|---|---|---|
| PT-2HE: N,N-di(β-hydroxyethyl)-p-toluidine DMPT: N, N-dimethyl-p-toluidine Nyper-BMT-M: mixture of dibenzoyl peroxide, benzoyl m-methyl-benzoyl peroxide, m-toluoyl peroxide (manufactured by NOF CORPORATION) Nyper-NS: dibenzoyl peroxide (manufactured by NOF CORPORATION) Percumyl H-80: cumene hydroperoxide (manufactured by NOF CORPORATION) Perbutyl Z: t-butyl peroxypentoate (manufactured by NOF CORPORATION) Permec N: methyl ethyl ketone peroxide (manufactured by NOF CORPORATION) Softon 1200: calcium carbonate having an average particle size of 1.8 µm (manufactured by Shiraishi Calcium Co., Ltd.) No.5 Silica Sand: average particle diameter 500 µm No.7 Silica Sand: average particle diameter 180 µm Cab-O-Sil TS-720: fumed silica having an average particle size of 16 nm | | | | | | | | | | | | | | | | | | |

As shown in the above results, the curable resin compositions of Examples 1 to 8 can be cured in a short time even under an extremely low temperature environment such as -25°C, and can be cured with high workability, concrete adhesiveness, excellent compression strength.

Hereinafter, the second embodiment of the present invention will be described in more detail with reference to examples and comparative examples, but the second embodiment of the present invention is not limited to the following examples.

Using the radical polymerizable resin compositions obtained in Synthesis Examples 1 to 6 of the first embodiment of the present invention, curable resin compositions of Examples 9 to 16 having compositions shown in Table 1 were prepared, and the following items was evaluated.

After the radical polymerizable resin compositions of Synthesis Examples 1 to 6 were allowed to stand in an atmosphere of -25°C for 24 hours, the curable resin compositions of Examples 9 to 16 were prepared with the formulation shown in Table 1. Evaluation of curability at -25°C and measurement of compressive strength of the obtained curable resin composition were carried out according to the method of the Examples of the first embodiment. The drying properties of Examples 1 to 8 and Comparative Example 1 of the first embodiment and Example 9 of the second embodiment were also evaluated in accordance with the following method. The results are shown in Table 1.

Amounts of the cobalt metal salt, the hydroxyl group-containing aromatic tertiary amine, the aromatic tertiary amine, the organic peroxide, and the inorganic filler shown in Table 1 were amounts with respect to 100 parts by mass of the radical polymerizable resin compositions of Synthesis Examples 1 to 6.

### [-25°C Drying Property]

A surface drying property of the test pieces prepared in -25°C-curability was measured. By checking a drying time until disappearance of stickiness of surface by touching the surface with one's fingers, the surface drying property was evaluated by "E (Excellent)" when the drying time was less than 3 hours, "G (good)" when the drying time was less than 6 hours, "N (normal)" when the drying time was more than 6 hours and less than 12 hours, and "B (bad)" when the drying time was less than 12 hours. The results are shown in Table 1.

As shown in the above results, in the second embodiment of the present invention, the curable resin compositions of Examples 9 to 16 which do not contain the cobalt metal salt (B) can also be cured in less than 6 hours under an extremely low temperature environment such as -25°C. Although the results are not as excellent as those in Examples 1 to 8 of the first embodiment of the present invention, the compositions of Examples 9 to 16 have higher workability, concrete adhesiveness and compressive strength than Comparative Example 1. In addition, in the second embodiment of the present invention, the storage stability of the curable resin compositions tends to be longer if the cobalt metal salt (B) is not included. Therefore, it is also possible to prepare a curable resin composition free from the cobalt metal salt (B) beforehand and use the cobalt metal salt (B) when used.

In addition, the curable resin compositions of Examples 1 to 16 of the first and second embodiments are superior in drying property of the coating film as compared with Comparative Example 1 when cured at -25°C.

## Claims

1. Use of a low-temperature-curable material as a cross-section repair material,
wherein the low-temperature-curable material comprises:
100 parts by mass of a radical polymerizable resin composition (A) ;
0.1 to 10 parts by mass of hydroxyl group-containing aromatic tertiary amine (C-1) represented by the following general formula (I), 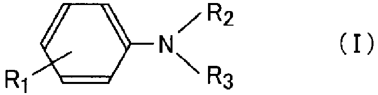 wherein R₁ is H, CH₃ or OCH₃, R₂ is a hydroxyalkyl group and R₃ is an alkyl group or a hydroxyalkyl group;
0.1 part by mass to 10 parts by mass of the organic peroxide (D); and
1.0 to 500 parts by mass of an inorganic filler (E),
wherein the radical polymerizable resin composition (A) comprises
at least one radical polymerizable resin (A-1) selected from the group consisting of a vinyl ester resin, a urethane (meth)acrylate resin and a polyester (meth)acrylate resin; and
a radical polymerizable unsaturated monomer (A-2) having at least two or more (meth)acryloyl groups per molecule, and
a content of the radical polymerizable unsaturated monomer (A-2) having at least two (meth)acryloyl groups per molecule in the radical polymerizable resin composition (A) is 35 % to 95 % by mass.

2. The use according to claim 1,
wherein the material further comprises:
0.05 part by mass to 1.0 part by mass of an aromatic tertiary amine (C-2) represented by the following general formula (II) 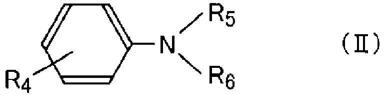 wherein R₄ is H, CH₃ or OCH₃, and R₅ and R₆ are each independently an alkyl group.

3. The use according to claim 2,
wherein the material further comprises 0.1 parts by mass to 10 parts by mass of a cobalt metal salt (B).

4. The use according to claim 1 or 2,
wherein the material does not contain a cobalt metal salt (B).

5. The use according to any one of claims 1 to 4,
wherein a viscosity of the radical polymerizable resin composition (A) is 150 mPa·s or less at 25°C.

6. The use 1 according to any one of claims 2 to 5,
wherein a ratio (C-1:C-2) of the mass of the blending amount of the hydroxyl group-containing aromatic tertiary amine (C-1) represented by the general formula (I) with respect to the above-mentioned aromatic tertiary amine (C-2) represented by the general formula (II) is 20:1 to 1:1

7. The use according to any one of claims 1 to 6,
wherein the organic peroxide (D) is at least one organic peroxide selected from the group consisting of dibenzoyl peroxide, benzoyl m-methylbenzoyl peroxide, m-toluoyl peroxide, methyl ethyl ketone peroxide, cumene hydroperoxide and t-butyl peroxybenzoate.

8. The use according to any one of claims 1 to 7,
wherein the organic peroxide (D) is at least one organic peroxide selected from the group consisting of benzoyl m-methylbenzoyl peroxide, m-toluoyl peroxide, methyl ethyl ketone peroxide, cumene hydroperoxide and t-butyl peroxybenzoate.

9. The use according to any one of claims 1 to 8,
wherein the inorganic filler (E) is at least one powdery inorganic filler selected from the group consisting of talc, calcium carbonate, silica sand and fine particulate silica.

10. The use according to any one of claims 1 to 9,
wherein a cured product prepared under an atmosphere of -25°C is **characterized in that** a compressive strength after 24 hours is 20 MPa or more in a test according to JIS K 6911 "General Test Method for Thermosetting Plastics".

11. A cross-section repairing method comprising steps of forming a coating film by coating the low-temperature-curable material as described in any one of claims 1 to 10 on at least one cross-section selected from the group consisting of concrete, asphalt concrete, mortar, wood and metal, at an atmosphere of -25°C or higher; and
curing the coating film.

## Patentansprüche

1. Verwendung eines bei niedriger Temperatur härtbaren Materials als Querschnittsreparaturmaterial, wobei das bei niedriger Temperatur härtbare Material umfasst:
100 Masseteile einer radikalisch polymerisierbaren Harzzusammensetzung (A);
0,1 bis 10 Massenteile eines hydroxygruppenhaltigen aromatischen tertiären Amins (C-1) der folgenden allgemeinen Formel (I), 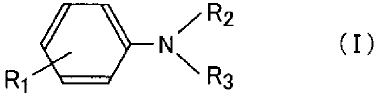 wobei R₁ H, CH3 oder OCH3 ist, R₂ eine Hydroxyalkylgruppe ist und R₃ eine Alkylgruppe oder eine Hydroxyalkylgruppe ist;
0,1 Massenteil bis 10 Massenteile des organischen Peroxids (D); und
1,0 bis 500 Masseteile eines anorganischen Füllstoffs (E),
wobei die radikalisch polymerisierbare Harzzusammensetzung (A) mindestens ein radikalisch polymerisierbares Harz (A-1), ausgewählt aus der Gruppe bestehend aus einem Vinylesterharz, einem Urethan(meth)acrylatharz und einem Polyester(meth)acrylatharz; und
ein radikalisch polymerisierbares ungesättigtes Monomer (A-2) mit mindestens zwei oder mehr (Meth)acryloylgruppen pro Molekül umfasst, und
ein Gehalt des radikalisch polymerisierbaren ungesättigten Monomers (A-2) mit mindestens zwei (Meth)acryloylgruppen pro Molekül in der radikalisch polymerisierbaren Harzzusammensetzung (A) 35 bis 95 Masse-% beträgt.

2. Verwendung nach Anspruch 1, wobei das Material ferner umfasst:
0,05 Massenteil bis 1,0 Massenteil eines aromatischen tertiären Amins (C-2) der folgenden allgemeinen Formel (II) 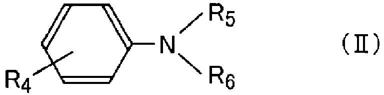 wobei R₄ H, CH3 oder OCH3 ist und R₅ und R₆ jeweils unabhängig voneinander eine Alkylgruppe sind.

3. Verwendung nach Anspruch 2, wobei das Material ferner 0,1 Massenteile bis 10 Massenteile eines Kobaltmetallsalzes (B) umfasst.

4. Verwendung nach Anspruch 1 oder 2, wobei das Material kein Kobaltmetallsalz (B) enthält.

5. Verwendung nach einem der Ansprüche 1 bis 4, wobei eine Viskosität der radikalisch polymerisierbaren Harzzusammensetzung (A) 150 mPa·s oder weniger bei 25°C beträgt.

6. Verwendung 1 nach einem der Ansprüche 2 bis 5, wobei ein Verhältnis (C-1:C-2) der Masse der Mischungsmenge des hydroxylgruppenhaltigen aromatischen tertiären Amins (C-1) der allgemeinen Formel (I), in Bezug auf das oben genannte aromatische tertiäre Amin (C-2) der allgemeinen Formel (II), 20:1 bis 1:1 beträgt.

7. Die Verwendung nach einem der Ansprüche 1 bis 6, wobei das organische Peroxid (D) mindestens ein organisches Peroxid ist, ausgewählt aus der Gruppe bestehend aus Dibenzoylperoxid, Benzoyl m-Methylbenzoylperoxid, m-Toluoylperoxid, Methylethylketonperoxid, Cumolhydroperoxid und t-Butylperoxybenzoat.

8. Verwendung nach einem der Ansprüche 1 bis 7, wobei das organische Peroxid (D) mindestens ein organisches Peroxid ist, ausgewählt aus der Gruppe bestehend aus Benzoyl m-Methylbenzoylperoxid, m-Toluoylperoxid, Methylethylketonperoxid, Cumolhydroperoxid und t-Butylperoxybenzoat.

9. Verwendung nach einem der Ansprüche 1 bis 8, wobei der anorganische Füllstoff (E) mindestens ein pulverförmiger anorganischer Füllstoff ist, ausgewählt aus der Gruppe bestehend aus Talkum, Calciumcarbonat, Quarzsand und feinteiligem Siliziumdioxid.

10. Verwendung nach einem der Ansprüche 1 bis 9, wobei ein unter einer Atmosphäre von -25°C hergestelltes gehärtetes Produkt **dadurch gekennzeichnet ist, dass** eine Druckfestigkeit nach 24 Stunden 20 MPa oder mehr in einem Test gemäß JIS K 6911 "General Test Method for Duroplaste" beträgt.

11. Querschnittsreparaturverfahren, umfassend die Schritte
des Bildens eines Beschichtungsfilms durch Beschichten des bei niedriger Temperatur härtbaren Materials nach einem der Ansprüche 1 bis 10 auf mindestens einen Querschnitt, ausgewählt aus der Gruppe bestehend aus Beton, Asphaltbeton, Mörtel, Holz und Metall, bei einer Atmosphäre von -25°C oder höher; und
des Aushärtens des Beschichtungsfilms.

## Revendications

1. Utilisation d'un matériau durcissable à basse température en tant que matériau de réparation de section transversale,
dans laquelle le matériau durcissable à basse température comprend :
100 parties en masse d'une composition de résine polymérisable par voie radicalaire (A) ;
0,1 à 10 parties en masse d'une amine tertiaire aromatique contenant un groupe hydroxyle (C-1) représentée par la formule développée (I) suivante, 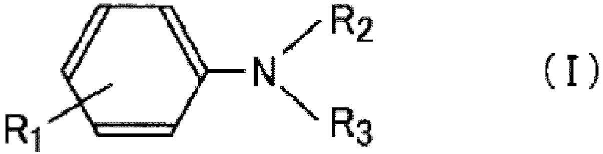 dans laquelle R₁ est H, CH₃ ou OCH₃, R₂ est un groupe hydroxyalkyle et R₃ est un groupe alkyle ou un groupe hydroxyalkyle ;
0,1 partie en masse à 10 parties en masse du peroxyde organique (D) ; et
1,0 à 500 parties en masse d'une charge minérale (E),
dans laquelle la composition de résine polymérisable par voie radicalaire (A) comprend
au moins une résine polymérisable par voie radicalaire (A-1) choisie dans le groupe constitué d'une résine d'ester vinylique, d'une résine de (méth)acrylate d'uréthane et d'une résine de (méth)acrylate de polyester ; et
un monomère insaturé polymérisable par voie radicalaire (A-2) ayant au moins deux groupes (méth)acryloyle ou plus par molécule, et
une teneur du monomère insaturé polymérisable par voie radicalaire (A-2) ayant au moins deux groupes (méth)acryloyle par molécule dans la composition de résine polymérisable par voie radicalaire (A) est de 35 % à 95 % en masse.

2. Utilisation selon la revendication 1,
dans laquelle le matériau comprend en outre :
0,05 partie en masse à 1,0 partie en masse d'une amine tertiaire aromatique (C-2) représentée par la formule développée (II) suivante 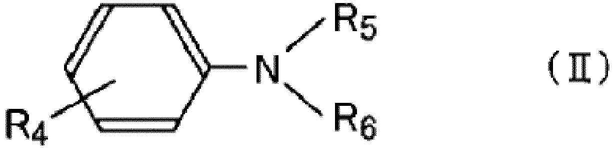 dans laquelle R₄ est H, CH₃ ou OCH₃, et R₅ et R₆ sont chacun indépendamment un groupe alkyle.

3. Utilisation selon la revendication 2,
dans laquelle le matériau comprend en outre 0,1 partie en masse à 10 parties en masse d'un sel métallique de cobalt (B).

4. Utilisation selon la revendication 1 ou 2,
dans laquelle le matériau ne contient pas de sel métallique de cobalt (B).

5. Utilisation selon l'une quelconque des revendications 1 à 4,
dans laquelle une viscosité de la composition de résine polymérisable par voie radicalaire (A) est de 150 mPa·s ou moins à 25 °C.

6. Utilisation selon l'une quelconque des revendications 2 à 5,
dans laquelle un rapport (C-1/C-2) de la masse de la quantité de mélange de l'amine tertiaire aromatique contenant un groupe hydroxyle (C-1) représentée par la formule développée (I) par rapport à l'amine tertiaire aromatique (C-2) mentionnée ci-dessus représentée par la formule développée (II) est de 20/1 à 1/1

7. Utilisation selon l'une quelconque des revendications 1 à 6,
dans laquelle le peroxyde organique (D) est au moins un peroxyde organique choisi dans le groupe constitué du peroxyde de dibenzoyle, du peroxyde de benzoyl m-méthylbenzoyle, du peroxyde de m-toluoyle, du peroxyde de méthyl éthyl cétone, de l'hydroperoxyde de cumène et du peroxybenzoate de t-butyle.

8. Utilisation selon l'une quelconque des revendications 1 à 7,
dans laquelle le peroxyde organique (D) est au moins un peroxyde organique choisi dans le groupe constitué du peroxyde de benzoyl m-methylbenzoyle, du peroxyde de m-toluoyle, du peroxyde de méthyl éthyl cétone, de l'hydroperoxyde de cumène et du peroxybenzoate de t-butyle.

9. Utilisation selon l'une quelconque des revendications 1 à 8,
dans laquelle la charge minérale (E) est au moins une charge minérale en poudre choisie dans le groupe constitué du talc, du carbonate de calcium, du sable siliceux et de la silice particulaire fine.

10. Utilisation selon l'une quelconque des revendications 1 à 9,
dans laquelle un produit durci préparé dans une atmosphère de - 25 °C est **caractérisé en ce qu'**une résistance à la compression après 24 heures est de 20 MPa ou plus dans un essai selon la JIS K 6911 « Méthode d'essai générale pour plastiques themodurcissables ».

11. Procédé de réparation de section transversale comprenant les étapes de
formation d'un film de revêtement par application du matériau durcissable à basse température selon l'une quelconque des revendications 1 à 10 sur au moins une section transversale choisie dans le groupe constitué du béton, du béton asphaltique, du mortier, du bois et du métal, à une atmosphère de -25 °C ou supérieure ; et
durcissement du film de revêtement.
